Europäisches Patentamt

European Patent Office

Office européen des brevets

(19)

(11) Veröffentlichungsnummer: **0 064 776**
**A1**

(12) # EUROPÄISCHE PATENTANMELDUNG

(21) Anmeldenummer: 82200235.8

(22) Anmeldetag: 26.02.82

(51) Int. Cl.³: **B 05 D 7/22**

(30) Priorität: 29.04.81 DE 3116994

(43) Veröffentlichungstag der Anmeldung:
17.11.82 Patentblatt 82/46

(84) Benannte Vertragsstaaten:
AT BE CH DE FR GB IT LI LU NL

(71) Anmelder: Rheinisches Zinkwalzwerk GMBH & Co. KG
Bahnhofstrasse 90
D-4354 Datteln(DE)

(72) Erfinder: Groth, Volker
Am Sternbusch 17
D-4716 Olfen(DE)

(72) Erfinder: Pretzel, Klaus
Zum Dahl 7b
D-4670 Lünen(DE)

(72) Erfinder: Stradmann, Adolf
Dahlstrasse 47
D-4354 Datteln(DE)

(74) Vertreter: Fischer, Ernst, Dr.
Reuterweg 14
D-6000 Frankfurt am Main 1(DE)

(54) Verfahren zur Korrosionsverhütung an Regenfallrohren, Rohrbogen oder dergleichen von Dachentwässerungssystemen.

(57) Bei einem Verfahren zur Korrosionsverhütung der Innenseite von maschinell innengelöteten Regenfallrohren (2), Rohrbogen oder dergleichen durch eine Schutzschicht werden diese zum Zwecke der Erzielung einer dauerhaften Schutzschicht unmittelbar nach dem Löten in der Lötwärme mit einem säurefesten Schutzlack beschichtet.

FIG. 2

EP 0 064 776 A1

Rheinisches Zinkwalzwerk
GmbH & Co., Kommanditgesellschaft
Bahnhofstraße 90, 4354 Datteln

24.04.1981
-DRQ/GKP-

Prov. Nr. 8682 RZW


Verfahren zur Korrosionsverhütung an Regenfallrohren, Rohrbogen oder dergleichen von Dachentwässerungssystemen
----------------------------------------------------


Die Erfindung betrifft ein Verfahren zur Korrosionsverhütung
der Innenseite von aus Blechen von Kupfer, Aluminium, verzinktem Stahl, Zink, insbesondere aus mit Kupfer und Titan,
legiertem, bandgewalztem, dauerstandfestem sowie um $180^{o}$
bruchfrei faltbarem Zink, geformten und maschinell innengelöteten Regenfallrohren, Rohrbogen oder dergleichen von
Dachentwässerungssystemen in Verbindung mit bituminösen
Baustoffen durch eine Schutzschicht.

Bei aus Zink bzw. Zinklegierungen hergestellten Produkten
für das Bauwesen bildet sich in der Atmosphäre auf der
Oberfläche zunächst eine Schicht aus Zinkhydroxid, die
durch die Reaktion mit dem Kohlendioxid der Luft zu einer
dichten, fest haftenden und wasserunlöslichen Deckschicht
aus basischem Zinkkarbonat umgewandelt wird. Diese Schutzschicht ist verantwortlich für den hohen Korrosionswiderstand
des Zinks. Durch die natürliche Schutzschicht aus basischem
Zinkkarbonat ist ein zusätzlicher Schutzanstrich unter
normalen Umwelteinflüssen nicht erforderlich. Allerdings
muß vermieden werden, daß Bitumen mit dem Zink in Berührung
kommt, da seit über 40 Jahren bekannt ist, daß Bitumen an
Zink Korrosion auslösen kann. Die Bitumenkorrosion wird
durch Abbauprodukte des Bitumen hervorgerufen, die bei
der Bewitterung in erster Linie durch den Einfluß der
UV-Strahlung entstehen. Diese stark sauren Abbauprodukte sind wasserlöslich und bilden bei geringem Wasserfluß, wie Tau und Nebel, hohe Säurekonzentrationen, die die Metalle generell angreifen. Normalerweise unterbleibt Bitumenkorrosion, wenn die Dacharbeiten nach den Regeln und Vorschriften des Dachdeckerhandwerks VOB-DIN 18 338 sachgemäß ausgeführt sind. Die häufigsten Mängel bestehen in fehlendem Oberflächenschutz, wie Bekiesung oder Besplittung als Abstrahlfläche, uneben verlegten Dachbahnen (Pfützenbildung) und zu flachen Dächern (= 3°), was dazu führt, daß der Niederschlag nicht ablaufen kann. Soweit bituminöse Baustoffe regelwidrig ohne wirksame Abstrahlungsschicht bleiben, müssen alle Metallteile ab der Wasserführungsebene mit einer Farb- oder Bitumenbeschichtung porenfrei geschützt werden. Diese Anstriche haben den Nachteil, daß sie Pflegeanstriche sind, die in ganz bestimmten Zeitabständen erneuert werden müssen, wobei eine Erneuerung in aller Regel nur bei Metallteilen, wie Winkelstreifen, Traufstreifen, Rinnen, die in der Wasserführungsebene liegen, erfolgt. Der Schutzanstrich in Regenfallrohren, Rohrbogen oder dergleichen kann im allgemeinen wegen der schweren Zugänglichkeit nicht erneuert werden.

Es ist deshalb die Aufgabe der vorliegenden Erfindung, maschinell innengelötete Regenfallrohre, Rohrbogen oder dergleichen mit einer dauerhaften Schutzschicht zu versehen.

Die Lösung dieser Aufgabe ist darin zu sehen, daß die Regenfallrohre, Rohrbogen oder dergleichen unmittelbar nach dem Löten in der Lötwärme mit einem säurefesten Schutzlack beschichtet werden.

Zweckmäßigerweise beträgt die Schichtdicke der Lackschicht 60 bis 120 $\mu$m.

Da die Regenfallrohre, Rohrbogen oder dergleichen unmittelbar nach dem Ausstoß aus der Lötmaschine noch eine Temperatur von 50 bis 120°C aufweisen, härtet der auf die Innenseite aufgetragene Lack sehr schnell aus, wobei ein quasi Einbrenneffekt erzielt wird, der der Lackschicht eine besondere Festigkeit gegen Verschleiß verleiht.

Das Auftragen der Lackschutzschicht erfolgt durch Hochdruckspritzen mittels eines in das Regenfallrohr, Rohrbogen oder dergleichen eingeführten Spritzstabes, an dessen vorderen Ende sich eine Düse mit radialen Austrittsöffnungen befindet. Der Lack wird in konzentrierter Form aufgespritzt und hat daher ein besseres Haftvermögen. Durch die minimale Verwendung von·Lösungsmitteln liegen die Lackteilchen nach dem Trocknen dichter. Wird eine stärkere Lackschicht aufgetragen, besteht weder die Gefahr des Laufens noch Nachsackens des Lacks. Da der Lack bei nur einem Spritzdurchgang einwandfrei deckt, kann auf das mehrfache Einführen des Spritzstabes verzichtet werden. Gegenüber konventionellem Auftrag von Schutzanstrichen kann bei diesem Verfahren mit höheren Viskositäten gearbeitet werden.

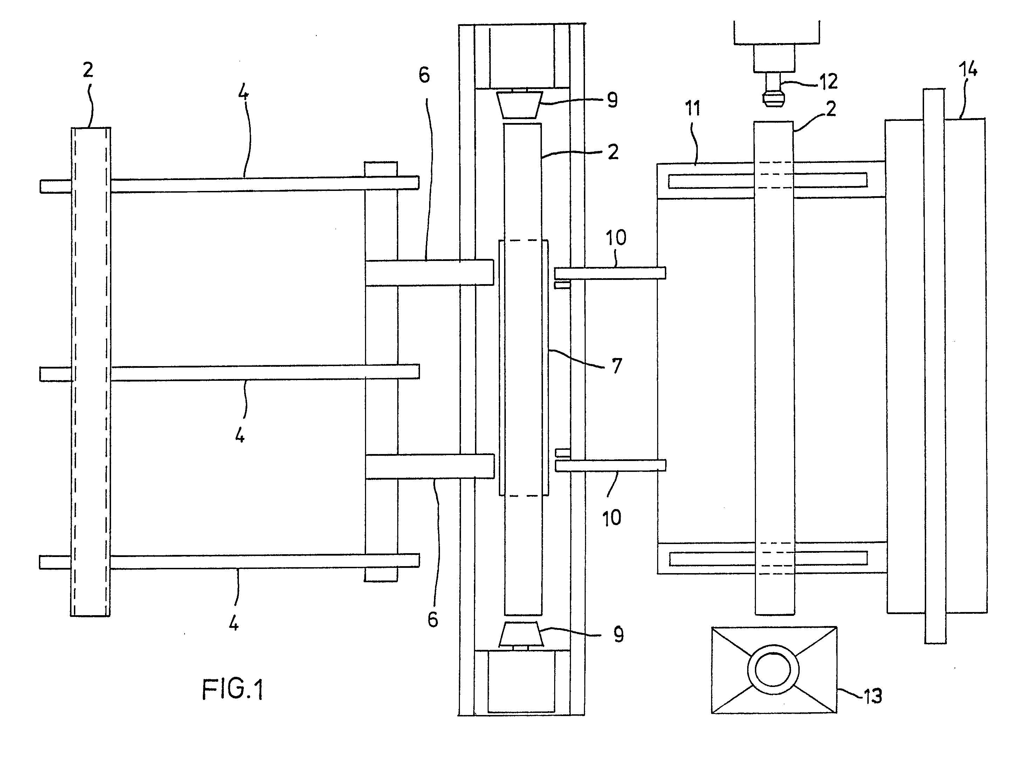

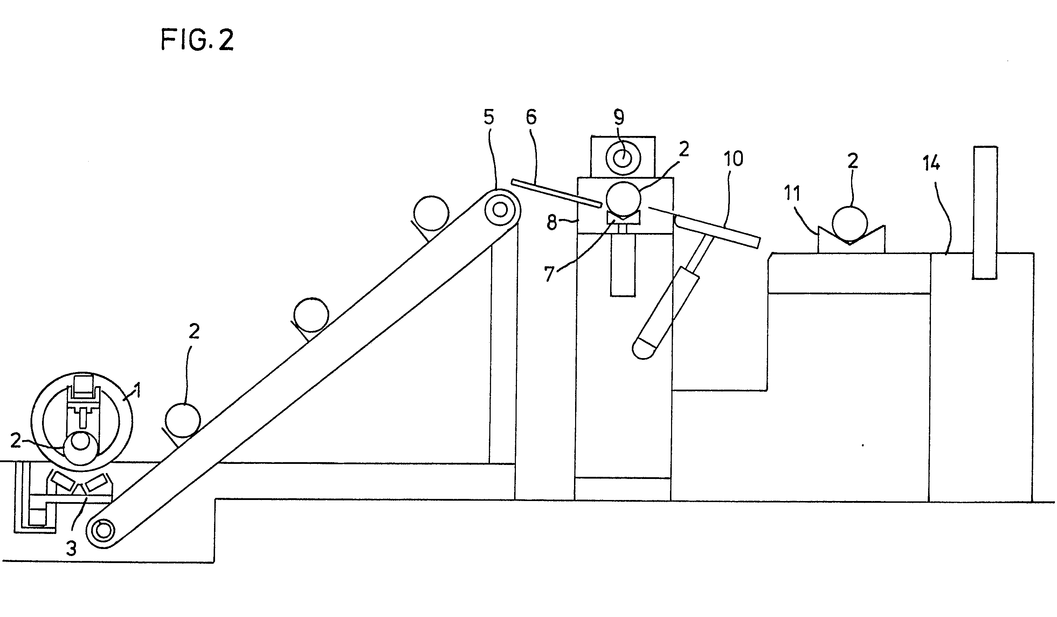

Die Vorrichtung zur Durchführung des Verfahrens ist in den Zeichnungen beispielhaft und schematisch dargestellt, wobei Fig. 1 eine Draufsicht und Fig. 2 eine Seitenansicht zeigen.

Das aus der Lötvorrichtung 1, wie diese beispielsweise in der DE-PS 26 07 970 beschrieben ist, ausgestoßene Regenfallrohr 2 wird von der Abnahmevorrichtung 3 auf den kontinuierlich laufenden Querförderer 4 aufgelegt, von dessen Kopfstation 5 es über die Gleitschienen 6 auf den Hubtisch 7 der Prüfstation 8 rollt. Nach Anheben des Hubtisches 7 werden die beiden Öffnungen des Regenfallrohrs

automatisch durch die Stopfen 9 verschlossen und die Dichtigkeit der Lötnaht geprüft. Über die hub-/senkbar angebrachten Gleitschienen 10 rollt das eine Temperatur von etwa 90$^{\circ}$C auf-weisende Regenfallrohr 2 auf den Tisch 11, wo der Sprühstab 12 in das Regenfallrohr 2 eingefahren und eine Lack-schicht von etwa 60 $\mu$m Dicke aufgetragen wird. Die sich dabei bildenden Lacknebel werden über die Dunsthaube 13 abgesaugt. Danach wird das beschichtete Regenfallrohr 2 auf den Packtisch 14 aufgelegt.

PATENTANSPRÜCHE
----------------

1. Verfahren zur Korrosionsverhütung der Innenseite von aus Blechen von Kupfer, Aluminium, verzinktem Stahl oder Zink, insbesondere aus mit Kupfer und Titan legiertem, bandgewalztem, dauerstandfestem und um 180° bruchfrei faltbarem Zink bestehenden, maschinell innengelöteten Regenfallrohren, Rohrbogen oder dergleichen von Dachentwässerungssystemen mit bituminösen Baustoffen durch eine Schutzschicht, dadurch gekennzeichnet, daß die Regenfallrohre, Rohrbogen oder dergleichen unmittelbar nach dem Löten in der Lötwärme mit einem säurefesten Schutzlack beschichtet werden.

2. Verfahren nach Anspruch 1, dadurch gekennzeichnet, daß die Lackschicht in einer Dicke von 60 bis 120 $\mu$m aufgespritzt wird.

3. Verfahren nach den Ansprüchen 1 und 2, dadurch gekennzeichnet, daß die Lackschutzschicht durch Hochdruckspritzen aufgetragen wird.

4. Verfahren nach Anspruch 3, dadurch gekennzeichnet, daß das Hochdruckspritzen mittels eines in das Regenfallrohr, Rohrbogen oder dergleichen eingeführten Spritzstabes erfolgt.

FIG.1

FIG.2

0064776

Europäisches
Patentamt

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US-A-3 941 087 (YAZAKI)<br>* Spalte 2, Zeile 29 - Spalte 3, Zeile 4; Spalte 4, Zeilen 28-64; Figur 8 * & DE - A - 2 239 899 | 1-4 | B 05 D 7/22 |
| Y | | 2,3 | |
| | --- | | |
| Y | DE-A-2 354 164 (OPPERMANN)<br>* Seite 1, Zeilen 1-4; Seite 2, Zeilen 7-22 * | 1 | |
| | --- | | |
| Y | TRAVAUX, Band 531, Mai 1979, Seiten 61-64, Paris, FR.<br>A. CAPOULADE: "Les tubes d'acier soudés pour canalisations d'eau"<br>* Seite 63, linke Spalte, Zeilen 9-22 * | 2 | |
| | --- | | RECHERCHIERTE SACHGEBIETE (Int. Cl. ³) |
| Y | US-A-3 995 075 (CONTINENTAL CAN)<br>* Spalte 1, Zeile 59 - Spalte 2, Zeile 38; Spalte 4, Zeilen 6-43 * | 3 | B 05 B<br>B 05 D<br>F 16 L |
| | --- | | |
| A | US-A-3 516 385 (WALLING) | 1 | |
| | ----- | | |

Der vorliegende Recherchenbericht wurde für alle Patentansprüche erstellt.

| Recherchenort<br>DEN HAAG | Abschlußdatum der Recherche<br>06-08-1982 | Prüfer<br>ATKINS J.F.C. |
|---|---|---|